# NEUE EUROPÄISCHE PATENTSCHRIFT

(11) **EP 3 319 763 B2**
(45) Veröffentlichungstag und Bekanntmachung des Hinweises auf die Entscheidung über den Einspruch: **26.07.2023**
(45) Hinweis auf die Patenterteilung: 28.08.2019
(21) Anmeldenummer: 16747482.4
(22) Anmeldetag: 29.07.2016
(51) Int. Cl.: B25J 15/00, B25J 19/00, B25J 19/06

(54) **VORRICHTUNG ZUR ANBINDUNG AN EINEN ROBOTER**
DEVICE FOR ATTACHING TO A ROBOT
DISPOSITIF DESTINÉ À ÊTRE RACCORDÉ À UN ROBOT

(30) Priorität: 01.09.2015 DE 102015216659
(43) Veröffentlichungstag der Anmeldung: 16.05.2018
(73) Patentinhaber: Siemens Aktiengesellschaft, 80333 München (DE)
(72) Erfinder: GERHARD, Detlef, 81829 München (DE)
(74) Vertreter: Siemens Patent Attorneys
(86) Internationale Anmeldenummer: PCT/EP2016/068138
(87) Internationale Veröffentlichungsnummer: WO 2017/036690

(56) Entgegenhaltungen:
- EP-A1- 0 016 921
- EP-A1- 0 295 208
- WO-A1-2015/089372
- DE-A1- 3 610 317
- DE-A1-102008 004 037
- DE-A1-102008 042 260
- DE-A1-102012 217 764
- DE-A1-102012 217 764
- DE-A1-102014 221 645
- DE-U1-202013 104 389
- JP-A- 2005 199 385
- JP-A- 2009 078 324
- US-A- 5 360 249
- US-A1- 2006 242 785
- US-A1- 2013 325 181
- US-B1- 7 313 464

## Beschreibung

Laut VDI-Richtlinie 2860 handelt es sich bei Industrierobotern um universell einsetzbare Bewegungsautomaten mit mehreren Achsen, deren Bewegungen frei programmierbar und gegebenenfalls sensorgeführt sind. Derartige Roboter lassen sich mit Greifern ausrüsten und können Handhabungs- oder Fertigungsaufgaben ausführen.

Aus dem Dokument "GWS Wechseln - Greiferwechselsystem", erhältlich im Internet am 23.07.2015 unter http://www.schunk.de/schunk_files/attachments/GWS_064_DE.pdf, ist eine Greifer-Wechselaufnahme bekannt, welche zur Aufnahme unterschiedlicher Greifermodule eingerichtet ist, wobei jedes der Greifermodule zum Halten eines Objektes eingerichtet ist.

Eine solche Greifer-Wechselaufnahme kann als Adapter an einem Roboterarm montiert werden, wodurch der Roboterarm mit unterschiedlichen Greifermodulen bestückt werden kann.

Im Rahmen der Mensch-Roboter-Kollaboration muss die Sicherheit des Menschen in der Zusammenarbeit mit dem Roboter gewährleistet werden. Bekannt ist hierzu beispielsweise, den Roboter in einer abgesicherten Roboterzelle einzuhausen.

Aus der Druckschrift DE 10 2012 217764 A1 ist eine Werkzeugschutzvorrichtung bekannt, bei der ein Werkzeug an einem Roboterarm von einer durch einen Aktor bewegten Schutzvorrichtung abgedeckt werden kann.

Durch die vorliegende Erfindung soll eine Vorrichtung zur Anbindung an einen Roboter geschaffen werden, welche eine Alternative zum Stand der Technik bereitstellt.

Diese Aufgabe wird erfindungsgemäß durch eine Vorrichtung gemäß Anspruch 1 gelöst, welche ein Greifermodul aufweist, wobei das Greifermodul zum Halten eines Objektes mittels Greifbacken oder Greiferfingern eingerichtet ist. Die Vorrichtung besitzt eine Schnittstelle, welche zur mechanischen Anbindung der Vorrichtung an einen Roboter eingerichtet ist.

Die Vorrichtung weist einen Antrieb auf, welcher zum Bewegen des Greifermdoduls von einer ausgefahrenen Position in eine eingefahrene Position eingerichtet ist. Sie weist weiterhin eine Außenhülle auf, deren Abmessungen ausgelegt sind für ein Ergreifen eines Objekts mit dem Greifermodul in der ausgefahrenen Position, und eine zumindest teilweise Abdeckung des Greifermdoduls und des Objekts in der eingefahrenen Position.

Erfindungsgemäß ist das Greifermodul mit dem Antrieb ein- und ausfahrbar in der Vorrichtung eingebaut.

Die im Folgenden genannten Vorteile müssen nicht notwendigerweise durch den Gegenstand des unabhängigen Patentanspruchs erzielt werden. Vielmehr kann es sich hierbei auch um Vorteile handeln, welche lediglich durch einzelne Ausführungsformen, Varianten oder Weiterbildungen erzielt werden.

Die Vorrichtung erlaubt es, das Objekt nach dem Ergreifen durch das Greifermodul mit dem Antrieb in eine Kammer zu ziehen, welche durch die Außenhülle gebildet wird. Die Außenhülle ist dabei eingerichtet, das Objekt zumindest teilweise abzudecken, und ausreichend groß, um das Objekt abzuschirmen.

Die Vorrichtung kann als Greiferbasissystem verstanden werden, an welchem das Greifermodul adaptiert ist. Der Antrieb zieht das gesamte Greifermodul samt Objekt in das Greiferbasissystem hinein.

Durch die Vorrichtung wird ein Adapter geschaffen, welcher ein Sicherheits-Greifersystem mit Objekteinhausung für eine sichere Mensch-Roboter-Interaktion bereitstellt. Die Außenhülle schützt den Menschen vor durch das Greifermodul ergriffenen, scharfkantigen Objekten, welche andernfalls zu Verletzungen der im Arbeitsraum befindlichen Personen führen könnten. Dank der Vorrichtung können daher auch scharfkantige oder spitze Objekte sicher durch den Roboter transportiert werden.

Die Vorrichtung kann beispielsweise zur Anbindung von Greifermodulen an Industrieroboter, beispielsweise Delta-Roboter oder Gelenkarmroboter, eingesetzt werden. Zusätzlich hat die Vorrichtung den Vorteil, dass sie auch für Montageaufgaben eingesetzt werden kann.

Gemäß einer Ausführungsform ist die Außenhülle biegsam und mit Dehnungssensoren, insbesondere Dehnungsmessstreifen, ausgerüstet. Dies hat den Vorteil, dass Berührungen durch den Menschen, welche zu einer Verformung der biegsamen Außenhülle führen, mittels der Dehnungssensoren detektiert werden können.

In einer Weiterbildung ist die Außenhülle mit einer kapazitiven Sensorik, insbesondere einer taktilen Haut, auf ihrer Oberfläche ausgestattet. Die Außenhülle ist insbesondere biegsam, weich oder gepolstert.

Diese Weiterbildung ebenfalls den Vorteil, dass eine Berührung durch den Menschen detektiert werden kann.

Gemäß einer Ausführungsform weist die Außenhülle die geometrische Form einer Mantelfläche eines Zylinders oder eines Prismas auf.

In einer Weiterbildung befindet sich das Greifermodul und das ergriffene Objekt in der eingefahrenen Position vollständig innerhalb einer durch die Außenhülle gebildeten Kammer.

Gemäß einer Ausführungsform ist die Außenhülle eine flächig ausgebildete Abdeckung, oder eine gitterförmige Abdeckung, welche insbesondere aus Metallrohren oder Kunststoffrohren gefertigt ist. Innerhalb der Rohre können Kabel verlegt werden.

In einer Weiterbildung ist der Antrieb mindestens ein pneumatischer Zylinder, ein Elektromotor oder ein Teleskopantrieb.

Der Antrieb kann auch für eine schnelle Aufnahme von Objekten genutzt werden, für die nicht der gesamte Roboterarm bewegt werden muss. Der Teleskopantrieb kann auch als Teleskopmechanik in Verbindung mit einem Elektromotor realisiert sein und bietet den Vorteil, dass das Greifermodul mindestens um die Basislänge der Teleskopmechanik herausfahrbar ist.

Gemäß einer Ausführungsform weist die Schnittstelle eine Datenschnittstelle auf, welche insbesondere als Feldbus-Schnittstelle, insbesondere für einen CAN-Bus oder für einen Profibus, als serielle Schnittstelle, insbesondere Firewire, als Ethernet- oder Profinet-Anschluss, und/oder als WLan-Adapter ausgestaltet ist.

Vorteilhaft ist hierbei die Ausgestaltung der Datenschnittstelle als Feldbus-Schnittstelle, über welche die Vorrichtung neben anderen Feldgeräten, Sensoren und Aktoren in einer industriellen Anlage mit Automatisierungsgeräten verbunden werden kann.

In einer Weiterbildung umfasst die Schnittstelle zusätzlich eine erste Steckverbindungskomponente, welche eine Steuerschnittstelle mit einer Mehrzahl von Kontakten bereitstellt, welche zur Übertragung von Steuersignalen geeignet sind. Alternativ oder ergänzend umfasst die Schnittstelle zusätzlich eine zweite Steckverbindungskomponente, welche eine elektrische Schnittstelle zur Anbindung an eine Lastversorgung bereitstellt.

Die Vorrichtung kann die Steuersignale und die Lastversorgung sowohl zum Betrieb des Antriebs als auch des Greifermoduls nutzen.

Gemäß einer Ausführungsform beinhaltet die Schnittstelle zusätzlich eine dritte Steckverbindungskomponente, welche eine pneumatische Schnittstelle mit Anschlüssen zur Zufuhr und Abfuhr von Druckluft bereitstellt.

Die Vorrichtung kann die Druckluft sowohl zum Betrieb des Antriebs als auch des Greifermoduls nutzen.

In einer Weiterbildung besitzt die Vorrichtung mindestens einen ersten Sensor, insbesondere einen Bildsensor oder einen Infrarot-Punktsensor, welcher insbesondere an einer der Schnittstelle gegenüberliegenden Kante der Außenhülle montiert ist.

Dies hat den Vorteil, dass der Sichtbereich des ersten Sensors weder durch das Objekt noch durch die Außenhülle eingeschränkt wird. Im Gegensatz zu herkömmlicher Sensorik wird hierbei die Umgebung nicht durch das Objekt verdeckt. Sofern es sich bei dem ersten Sensor um einen Bildsensor handelt, kann dies auch ein Infrarot-Bildsensor sein. Weiterhin kann der Bildsensor mit einer Optik ausgestattet werden, wodurch der erste Sensor als Kamera ausgebildet wird.

Gemäß einer Ausführungsform beinhaltet die Vorrichtung einen zweiten Sensor, insbesondere einen Bildsensor oder Infrarot-Punktsensor, welcher insbesondere an der der Schnittstelle gegenüberliegenden Kante der Außenhülle auf einer dem ersten Sensor gegenüberliegenden Seite montiert ist.

Sofern der erste Sensor und der zweite Sensor Bildsensoren sind, können diese beispielsweise als CCD-Sensoren oder CMOS-Sensoren gewählt werden. Als Infrarot-Punktsensor eignet sich beispielsweise ein Temperatur-Punktsensor.

In einer Weiterbildung beinhaltet die Vorrichtung einen dritten Sensor, welcher ein Infrarotsensor ist und zur Überwachung eines Erfassungsbereichs eingerichtet ist, welcher größer ist als ein Erfassungsbereich des ersten Sensors.

Der dritte Sensor dient zur Überwachung eines größeren Umfeldes oder größerer Entfernungen.

Gemäß einer Ausführungsform beinhaltet die Vorrichtung eine Recheneinheit, welche zur Auswertung von Signalen des ersten Sensors eingerichtet ist, wobei insbesondere auch Signale des zweiten und/oder dritten Sensors verarbeitet werden. Die Recheneinheit ist weiterhin eingerichtet zur Detektion des Objekts anhand der Signalauswertung.

Die entsprechende Einrichtung der Recheneinheit besteht beispielsweise in einer geeigneten Programmierung.

In einer Weiterbildung ist die Recheneinheit eingerichtet zur Ausgabe von Ergebnissen der Signalauswertung über die Datenschnittstelle. Dies hat den Vorteil, dass die Informationen der Sensoren in der Vorrichtung vorverarbeitet und komprimiert an eine darüber liegende Steuerung weitergeleitet werden können.

Gemäß einer Ausführungsform sind der erste Sensor und der zweite Sensor Bildsensoren. Die Recheneinheit ist eingerichtet zur Auswertung von Signalen des ersten Sensors und des zweiten Sensors, wobei die Recheneinheit programmiert ist zur Berechnung einer 3D-Bildinformation aus 2D-Bildinformationen der Sensoren, und zur Ausgabe der 3D-Bildinformation über die Datenschnittstelle insbesondere komprimiert in Form von Vektoren.

Der Roboterarm ist mit der Vorrichtung ausgerüstet. Der Roboter ist ebenfalls mit der Vorrichtung ausgerüstet.

In einer Weiterbildung besitzt der Roboter eine Steuerung, welche eingerichtet ist zur Detektion einer Berührung anhand von Signalen von Sensoren der Außenhülle, und zum Versetzen des Roboters in einen Schutzmodus, wobei eine Bewegung des Roboters in dem Schutzmodus insbesondere ausgesetzt, verlangsamt oder mit verringerter Kraft ausgeführt wird.

Gemäß einer Ausführungsform besitzt der Roboter eine Steuerung, welche eingerichtet ist zur Detektion einer Berührung anhand von Signalen von Sensoren der Außenhülle, und zum Erlernen eines Bewegungsablaufs anhand der Berührung.

Im Folgenden werden Ausführungsbeispiele der Erfindung anhand von Figuren näher erläutert. In den Figuren sind gleiche oder funktionsgleiche Elemente mit denselben Bezugszeichen versehen, sofern nichts anderes angegeben ist. Es zeigen:
- Figur 1: einen Adapter zur Anbindung eines Greifermoduls an einen Roboter, wobei sich das Greifermodul zum Ergreifen eines Objekts in einer ausgefahrenen Position befindet,
- Figur 2: den Adapter aus Figur 1, wobei sich das Greifermodul in einer eingefahrenen Position befindet, wodurch das Greifermodul sowie das ergriffene Objekt durch eine Außenhülle geschützt und abgeschirmt werden,
- Figur 3: den Adapter aus Figur 2, welcher an einem Roboterarm installiert ist.

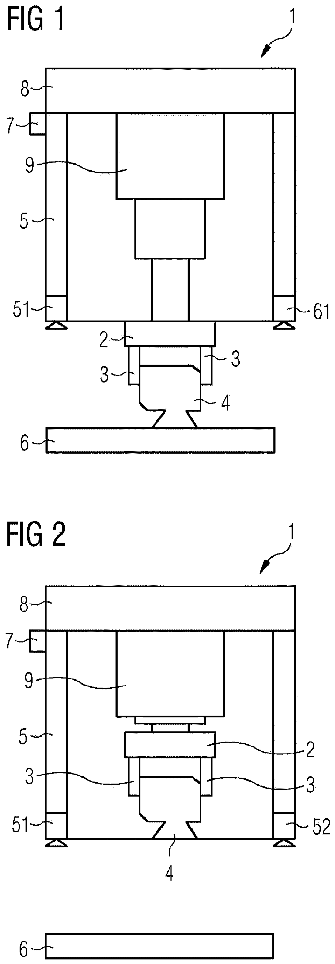

Figur 1 zeigt einen Adapter 1 zur Anbindung eines Greifermoduls 2 an einen Roboter. Das Greifermodul 2 greift mit Greifbacken 3 ein Objekt 4, welches auf einer Arbeitsplatte 6 abgelegt ist. Hierzu wurde das Greifermodul 2 mittels eines Antriebs 9, hier ein Teleskopantrieb, ausgefahren, wodurch es eine Kammer, welche durch eine Außenhülle 5 gebildet wird, verlassen hat. Bei den Greifbacken 3 kann es sich alternativ auch um Greiferfinger handeln.

Das Greifermodul ist in einer ersten Variante fest mit dem Antrieb 9 verbunden. In einer zweiten Variante ist in Verlängerung des Antriebs 9 eine Greifer-Wechselaufnahme montiert, in welche unterschiedliche Greifermodule 2 eingesetzt werden können.

Der Adapter 1 stellt ein Greiferbasissystem bereit, mit welchem sich unterschiedliche Greifermodule adaptieren lassen. An der dem Greifermodul 2 gegenüberliegenden Seite weist der Adapter 1 eine Schnittstelle 8 auf, welche zur mechanischen Anbindung des Adapters 1 an einen Roboter eingerichtet ist. Die Schnittstelle 8 ist beispielsweise eingerichtet für eine Montage an einem Flansch am Ende eines Roboterarms.

In einer möglichen Variante des vorliegenden Ausführungsbeispiels ist die Außenhülle 5 biegsam und mit Dehnungssensoren, insbesondere Dehnungsmessstreifen, ausgerüstet. Die Außenhülle 5 ist beispielsweise aus Kunststoff gefertigt. Wenn der Adapter 1 durch einen Roboter bewegt wird und einen Menschen berührt, kommt es zu einer Verformung der Außenhülle 5, welche mittels der Dehnungsmessstreifen detektiert wird. Dies kann einer Steuerung des Roboters signalisiert werden, wodurch der Roboter in einen Schutzmodus versetzt wird. Im Schutzmodus wird die Bewegung des Roboters ausgesetzt, verlangsamt oder mit verringerter Kraft ausgeführt.

In einer anderen Variante des vorliegenden Ausführungsbeispiels ist die Außenhülle 5 mit einer kapazitiven Sensorik, insbesondere mit einer taktilen Haut, auf ihrer Oberfläche ausgestattet. Die Außenhülle 5 kann hierbei starr oder biegsam, weich oder gepolstert sein.

Entsprechende Technologien sind bekannt aus dem Dokument "Industrieroboter mit Annäherungsdetektion für sichere Mensch-Roboter-Kollaboration", erhältlich im Internet am 28.07.2015 unter http://www.iff.fraunhofer.de/de/geschaeftsbereiche/robotersys teme/kapazitive-sensorik.html , sowie dem Dokument "Taktile Sensorsysteme", erhältlich im Internet am 27.07.2015 unter http://www.iff.fraunhofer.de/content/dam/iff/de/dokumente/rob otersysteme/themenflyer/2013-03-taktile-sensorsysteme.pdf.

Die Formgebung der Außenhülle entspricht einer Mantelfläche eines Zylinders oder eines Prismas, wodurch eine zylinder- oder prismenförmige Kammer ausgebildet wird, in welche der Antrieb 9 das Greifermodul 2 mit dem Objekt 4 vollständig einziehen kann.

Die Außenhülle 5 ist entweder flächig ausgebildet, oder lediglich eine gitterförmige Abdeckung, wobei diese insbesondere aus Metallrohren oder Kunststoffrohren gefertigt ist, in welcher sich vorteilhafterweise Kabel von Sensoren führen lassen.

Der Antrieb 9 ist beispielsweise ein pneumatischer Zylinder, ein Elektromotor oder ein Teleskopantrieb, beispielsweise ein Teleskop-Spindelantrieb.

Der Durchmesser der Außenhülle 5 beträgt beispielsweise 50 mm bis 100 mm. Es sind jedoch auch gänzlich andere Werte für diesen Durchmesser möglich, beispielsweise 10 mm oder 20 cm bis 50 cm.

Die Schnittstelle 8 weist zur Übertragung von Informationen einer Recheneinheit 7 eine Datenschnittstelle auf, welche beispielsweise eine Feldbus-Schnittstelle, etwa für einen CAN-Bus oder einen Profibus, eine serielle Schnittstelle, beispielsweise FireWire, ein Ethernet- oder Profinet-Anschluss und/oder ein WLAN-Adapter ist.

In einer Variante beinhaltet die Schnittstelle zusätzlich eine erste Steckverbindungskomponente, welche eine Steuerschnittstelle mit einer Mehrzahl von Kontakten bereitstellt, welche zur Übertragung von Steuersignalen von einer zentralen Steuerung geeignet sind. Es handelt sich hierbei beispielsweise um einen 25-poligen Steckverbinder. Die Schnittstelle 8 kann außerdem eine zweite Steckverbindungskomponente aufweisen, welche eine elektrische Schnittstelle zur Anbindung an eine Lastversorgung bereitstellt. Bei der Lastversorgung handelt es sich beispielsweise um eine 24 Volt-, 230 Volt- oder 400 Volt-Lastversorgung. In einer weiteren Variante weist die Schnittstelle eine dritte Steckverbindungskomponente auf, welche eine pneumatische Schnittstelle mit Anschlüssen zur Zufuhr und Abfuhr von Druckluft bereitstellt.

Der Adapter 1 stellt die Steuersignale, die elektrische Lastversorgung sowie die Druckluft vorteilhafterweise für das Greifermodul 2 bereit. Weiterhin kann die Druckluft oder die elektrische Energie für den Antrieb 9 genutzt werden.

An der unteren Kante der Außenhülle 5 ist eine erste Kamera 51 montiert, welche beispielsweise aus einer Optik und einem CCD- oder CMOS-Bildsensor besteht. An der gegenüberliegenden Seite der Unterkante der Außenhülle 5 ist eine zweite Kamera 61 montiert. Die Bilder der beiden Kameras 51, 61 können benutzt werden, um das Greifen des Objektes 4 durch die Greiferbacken 3 zu unterstützen. Hierzu erfolgt beispielsweise eine Bildauswertung der Kamerabilder in einer Recheneinheit 7. Die Ansteuerung der Greiferbacken 3 erfolgt durch die Recheneinheit 7 oder eine zentrale Steuerung. In letzterem Fall übermittelt die Recheneinheit 7 die Kamerabilder oder eine komprimierte Auswertung der Kamerabilder über die Datenschnittstelle an die zentrale Steuerung. Die Recheneinheit 7 kann weiterhin aus den beiden Kamerabildern der Kameras 51, 61 mittels bekannter Bildverarbeitungsalgorithmen, beispielsweise Kanten- und Objekterkennungsalgorithmen, eine dreidimensionale Bildinformation berechnen. Die Recheneinheit 7 kann die dreidimensionale Bildinformation hierbei auf Vektoren reduzieren, welche über die Schnittstelle 8 an die zentrale Steuerung übermittelt werden.

Bei der Recheneinheit 7 handelt es sich beispielsweise um einen ARM-Prozessor oder einen DSP-Prozessor, welcher geeignet programmiert ist. Die Kameras 51, 61 können das für den Menschen sichtbare Lichtspektrum verarbeiten, aber auch als Infrarot-Kameras gewählt werden. Weiterhin können sie auch jeweils ein einfacher Infrarot-Punktsensor, beispielsweise ein Temperatur-Punktsensor sein.

Der Adapter 1 kann einen weiteren Sensor aufweisen, welcher ein Infrarot-Sensor ist und einen Erfassungsbereich überwacht, welcher wesentlich größer ist als die Erfassungsbereiche der Kameras 51, 61.

Nachdem die Greiferbacken 3 das Objekt 4 ergriffen haben, wird das Greifermodul 2 mittels des Antriebs 9 in die Kammer eingezogen, welche durch die Außenhülle 5 gebildet wird.

Figur 2 zeigt den Adapter 1, nachdem das Greifermodul 2 mit dem Objekt 4 vollständig in die Kammer eingezogen wurde. Das Greifermodul 2 und das Objekt 4 werden zumindest seitlich durch die Außenhülle 5 abgedeckt und abgeschirmt.

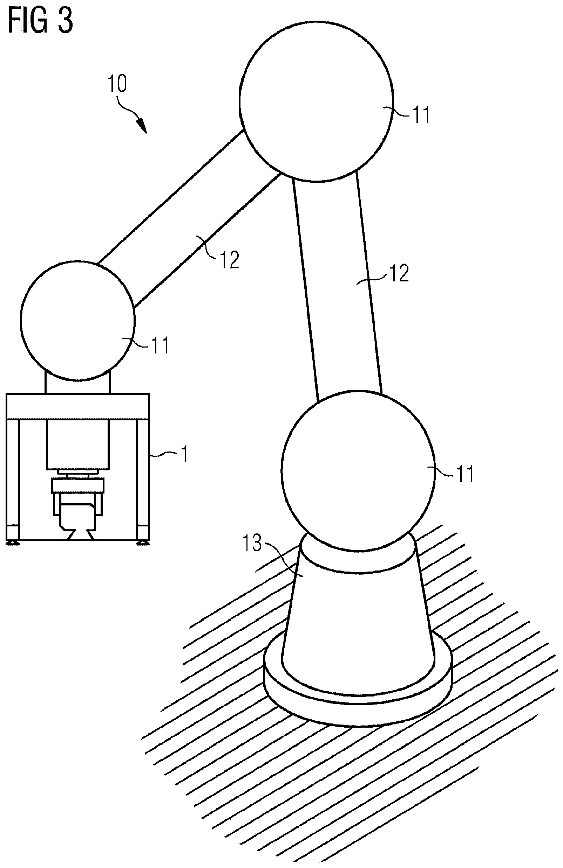

Figur 3 zeigt den Adapter 1 aus Figur 1 und Figur 2, welcher an einem Gelenk 11 eines Roboters 10 montiert ist. Der Roboter 10 verfügt über zwei Armglieder 12, welche über Gelenke 11 miteinander verbunden sind und auf einem Standfuß 13 montiert sind. Da das Greifermodul mit dem Objekt in Figur 3 vollständig in die Kammer der Außenhülle eingezogen wurde, kann der Roboter 10 seine Armglieder 12 mit hoher Geschwindigkeit verfahren, ohne Personen durch das gegebenenfalls scharfkantige Objekt 4 zu verletzen.

Weiterhin kann ein Bediener den Adapter 1 berühren, und durch Betätigung, beispielsweise eines Schalters, einen Lernmodus des Roboters 10 aktivieren. Im Lernmodus kann der Roboter 10 einen Bewegungsablauf anhand der Berührungen durch den Bediener erlernen, wozu der Bediener beispielsweise den Adapter 1 entsprechend einem gewünschten Bewegungsablauf bewegt.

Entsprechende Technologien sind bekannt aus dem Dokument" Roboter lernen heute leichter", erhältlich im Internet am 28.07.2015 unter http://www.produktion.de/automatisierung/robotik-undhandhabung/roboter-lernen-heute-leichter/, sowie aus dem Dokument "ii feel you", erhältlich im Internet am 27.07.2015 unter http://www.kuka-robotics.com/res/sps/a737ee03-5832-4c95-9d91-84e0de 80c664_LBR_iiwa_Produkt_Broschuere_DE.pdf.

Obwohl die Erfindung durch die Ausführungsbeispiele im Detail illustriert und beschrieben wurde, ist sie nicht durch die offenbarten Beispiele eingeschränkt. Andere Variationen können vom Fachmann hieraus abgeleitet werden, ohne den Schutzumfang der Erfindung zu verlassen.

## Patentansprüche

1. Vorrichtung zur Anbindung an einen Roboter,
- mit einem Greifermodul (2), wobei das Greifermodul (2) zum Halten eines Objekts (4) mittels Greifbacken (3) oder Greiferfingern eingerichtet ist, und
- mit einer Schnittstelle (8), welche zur mechanischen Anbindung der Vorrichtung an einen Roboter eingerichtet ist,
- mit einem Antrieb (9), eingerichtet zum Bewegen des Greifermoduls (2) von einer ausgefahrenen Position in eine eingefahrene Position, und
- mit einer Außenhülle (5), deren Abmessungen ausgelegt sind für
- ein Ergreifen eines Objekts (4) mit dem Greifermodul (2) in der ausgefahrenen Position, und
- eine zumindest teilweise Abdeckung des Greifermoduls (2) und des Objekts (4) in der eingefahrenen Position.

2. Vorrichtung nach Anspruch 1,
- bei der die Außenhülle (5) biegsam und mit Dehnungssensoren, insbesondere Dehnungsmessstreifen, ausgerüstet ist.

3. Vorrichtung nach Anspruch 1 oder 2,
- bei der die Außenhülle (5) mit einer kapazitiven Sensorik, insbesondere einer taktilen Haut, auf ihrer Oberfläche ausgestattet ist, und
- bei der die Außenhülle (5) insbesondere biegsam, weich oder gepolstert ist.

4. Vorrichtung nach einem der vorhergehenden Ansprüche,
- bei der die Außenhülle (5) die geometrische Form einer Mantelfläche eines Zylinders oder eines Prismas aufweist.

5. Vorrichtung nach einem der vorhergehenden Ansprüche,
- bei der sich das Greifermodul (2) und das ergriffene Objekt (4) in der eingefahrenen Position vollständig innerhalb einer durch die Außenhülle (5) gebildeten Kammer befinden.

6. Vorrichtung nach einem der vorhergehenden Ansprüche,
bei der die Außenhülle (5)
- eine flächig ausgebildete Abdeckung ist, oder
- eine gitterförmige Abdeckung ist, welche insbesondere aus Metallrohren oder Kunststoffrohren gefertigt ist.

7. Vorrichtung nach einem der vorhergehenden Ansprüche,
- bei der der Antrieb (9) mindestens ein pneumatischer Zylinder, ein Elektromotor oder ein Teleskopantrieb.

8. Vorrichtung nach einem der vorhergehenden Ansprüche,
- bei der die Schnittstelle (8), eine Datenschnittstelle aufweist, ausgestaltet insbesondere als
- Feldbus-Schnittstelle, inbesondere für einen CAN-Bus oder einen Profibus,
- serielle Schnittstelle, inbesondere Firewire,
- Ethernet- oder Profinet-Anschluss, und/oder
- WLAN-Adapter.

9. Vorrichtung nach einem der vorhergehenden Ansprüche,
bei der die Schnittstelle (8) zusätzlich
- eine erste Steckverbindungskomponente aufweist, welche eine Steuerschnittstelle mit einer Mehrzahl von Kontakten bereitstellt, welche zur Übertragung von Steuersignalen geeignet sind, und/oder
- eine zweite Steckverbindungskomponente aufweist, welche eine elektrische Schnittstelle zur Anbindung an eine Lastversorgung bereitstellt.

10. Vorrichtung nach einem der vorhergehenden Ansprüche,
bei der die Schnittstelle (8) zusätzlich
- eine dritte Steckverbindungskomponente aufweist, welche eine pneumatische Schnittstelle mit Anschlüssen zur Zufuhr und Abfuhr von Druckluft bereitstellt.

11. Vorrichtung nach einem der vorhergehenden Ansprüche,
- mit mindestens einem ersten Sensor (51), insbesondere einem Bildsensor oder einem Infrarot-Punktsensor, welcher insbesondere an einer der Schnittstelle (8) gegenüberliegenden Kante der Außenhülle (5) montiert ist.

12. Vorrichtung nach Anspruch 11,
- mit einem zweiten Sensor (61), insbesondere einem Bildsensor oder einem Infrarot-Punktsensor, welcher insbesondere an der der Schnittstelle (8) gegenüberliegenden Kante der Außenhülle (5) auf einer dem ersten Sensor (51) gegenüberliegenden Seite montiert ist.

13. Vorrichtung nach Anspruch 11 oder 12,
- mit einem dritten Sensor, welcher ein Infrarot-Sensor ist und eingerichtet ist zur Überwachung eines Erfassungsbereichs, welcher größer ist als ein Erfassungsbereich des ersten Sensors.

14. Vorrichtung nach einem der Ansprüche 11 bis 13,
mit einer Recheneinheit (7), eingerichtet zur
- Auswertung von Signalen des ersten Sensors (51), wobei insbesondere auch Signale des zweiten und/oder dritten Sensors verarbeitet werden, und
- Detektion des Objekts (4) anhand der Signalauswertung.

15. Vorrichtung nach Anspruch 8 und 14,
bei der die Recheneinheit (7) eingerichtet ist zur
- Ausgabe von Ergebnissen der Signalauswertung über die Datenschnittstelle.

16. Vorrichtung nach Anspruch 12 und 15,
- bei der der erste Sensor (51) und der zweite Sensor (61) Bildsensoren sind, und
- bei der die Recheneinheit (7) eingerichtet ist zur
- Auswertung von Signalen des ersten Sensors (51) und des zweiten Sensors (61), wobei die Recheneinheit (7) programmiert ist zur Berechnung einer 3D-Bildinformation aus 2D-Bildinformationen der Sensoren (51, 61), und
- Ausgabe der 3D-Bildinformation über die Datenschnittstelle, insbesondere komprimiert in Form von Vektoren.

17. Roboterarm, ausgerüstet mit einer Vorrichtung nach einem der Ansprüche 1 bis 16.

18. Roboter, ausgerüstet mit einer Vorrichtung nach einem der Ansprüche 1 bis 16.

19. Roboter nach Anspruch 18,
mit einer Steuerung, welche eingerichtet ist zur
- Detektion einer Berührung anhand von Signalen von Sensoren der Außenhülle (5), und
- Versetzen des Roboters in einen Schutzmodus, wobei eine Bewegung des Roboters in dem Schutzmodus insbesondere ausgesetzt, verlangsamt oder mit verringerter Kraft ausgeführt wird.

20. Roboter nach Anspruch 18 oder 19,
mit einer Steuerung, welche eingerichtet ist zur
- Detektion einer Berührung anhand von Signalen von Sensoren der Außenhülle (5), und
- Erlernen eines Bewegungsablaufs anhand der Berührung.

## Claims

1. Device for attaching to a robot,
- having a gripper module (2), wherein the gripper module (2) is configured to hold an object (4) by means of gripper jaws (3) or gripper fingers, and
- having an interface (8) configured to mechanically attach the device to a robot,
- having a drive (9) configured to move the gripper module (2) from an extended position into a retracted position, and
- having an outer shell (5) whose dimensions are designed for
- gripping an object (4) with the gripper module (2) in the extended position and
- at least partly covering the gripper module (2) and the object (4) in the retracted position.

2. Device according to Claim 1,
- wherein the outer shell (5) is flexible and equipped with strain sensors, in particular strain gauges.

3. Device according to Claim 1 or 2,
- wherein the outer shell (5) is equipped with a capacitive sensor system, in particular a tactile skin, on its surface and
- wherein the outer shell (5) is, in particular, flexible, soft or cushioned.

4. Device according to any one of the preceding claims,
- wherein the outer shell (5) has the geometric form of a lateral face of a cylinder or of a prism.

5. Device according to any one of the preceding claims,
- wherein the gripper module (2) and the gripped object (4), in the retracted position, are situated completely within a chamber formed by the outer shell (5).

6. Device according to any one of the preceding claims, wherein the outer shell (5)
- is a cover with a planar embodiment or
- is a grid-shaped cover which, in particular, is manufactured from metal tubes or polymer tubes.

7. Device according to any one of the preceding claims,
- wherein the drive (9) is at least one pneumatic cylinder, an electric motor or a telescopic drive.

8. Device according to any one of the preceding claims,
- wherein the interface (8) has a data interface, in particular configured as
- a fieldbus interface, in particular for a CAN bus or a PROFIBUS,
- a serial interface, in particular FireWire,
- an Ethernet or a PROFINET connector, and/or
- a WLAN adapter.

9. Device according to any one of the preceding claims, wherein the interface (8) additionally
- has a first plug-in connection component which provides a control interface with a plurality of contacts suitable for transmitting control signals and/or
- has a second plug-in connection component which provides an electrical interface for attaching to a load supply.

10. Device according to any one of the preceding claims, wherein the interface (8) additionally
- has a third plug-in connection component providing a pneumatic interface with connectors for supplying and evacuating pressurized air.

11. Device according to any one of the preceding claims,
- having at least one first sensor (51), in particular an image sensor or an infrared point sensor, which is assembled, in particular, at an edge of the outer shell (5) lying opposite the interface (8).

12. Device according to Claim 11,
- having a second sensor (61), in particular an image sensor or an infrared point sensor, which is assembled, in particular, on the edge of the outer shell (5) lying opposite the interface (8), on a side lying opposite the first sensor (51).

13. Device according to Claim 11 or 12,
- having a third sensor which is an infrared sensor and is configured to monitor a capture region that is larger than a capture region of the first sensor.

14. Device according to any one of Claims 11 to 13,
having a computing unit (7) configured to
- evaluate signals of the first sensor (51), wherein, in particular, signals of the second sensor and/or third sensor are also processed, and
- detect the object (4) on the basis of the signal evaluation.

15. Device according to Claims 8 and 14,
wherein the computing unit (7) is configured to
- output results of the signal evaluation via the data interface.

16. Device according to Claims 12 and 15,
- wherein the first sensor (51) and the second sensor (61) are image sensors and
- wherein the computing unit (7) is configured to
- evaluate signals from the first sensor (51) and from the second sensor (61), wherein the computing unit (7) is programmed to calculate a 3-D image information item from 2-D image information items from the sensors (51, 61), and
- output the 3-D image information item via the data interface, in particular in a compressed fashion in the form of vectors.

17. Robotic arm, equipped with a device according to any one of Claims 1 to 16.

18. Robot, equipped with a device according to any one of Claims 1 to 16.

19. Robot according to Claim 18,
having a controller configured to
- detect contact on the basis of signals from sensors of the outer shell (5) and
- put the robot into a protection mode, wherein a movement of the robot in the protection mode is, in particular, suspended, slowed down or carried out with a reduced force.

20. Robot according to Claim 18 or 19,
having a controller configured to
- detect contact on the basis of signals from sensors of the outer shell (5) and
- learn a movement sequence on the basis of the contact.

## Revendications

1. Dispositif destiné à être raccordé à un robot, comprenant :
un module de préhension (2), le module de préhension (2) étant configuré pour maintenir un objet (4), au moyen de mâchoires de préhension (3) ou de doigts de préhension, et
une interface (8) qui est configurée pour le raccordement mécanique du dispositif à un robot,
un entraînement (9) configuré pour faire passer le module de préhension (2) d'une position sortie dans une position rentrée et
une enveloppe extérieure (5) dont les dimensions sont conçues pour prendre un objet (4) au moyen du module de préhension (2) en position sortie et
au moins un recouvrement partiel du module de préhensions (2) et de l'objet (4) en position rentrée.

2. Dispositif selon la revendication 1, dans lequel l'enveloppe extérieure (5) est souple et est équipée de capteurs de contrainte, et plus particulièrement de jauges de contrainte.

3. Dispositif selon la revendication 1 ou 2, dans lequel l'enveloppe extérieure (5) est pourvue de capteurs capacitifs, et plus particulièrement d'une pellicule tactile sur sa surface et dans lequel l'enveloppe extérieure (5) est plus particulièrement souple, molle ou rembourrée.

4. Dispositif selon l'une des revendications précédentes, dans lequel l'enveloppe extérieure (5) présente la forme géométrique d'une surface enveloppante d'un cylindre ou d'un prisme.

5. Dispositif selon l'une des revendications précédentes, dans lequel le module de préhension (2) et l'objet pris (4) se trouvent, en position rentrée, entièrement à l'intérieur d'une chambre formée par l'enveloppe extérieure (5).

6. Dispositif selon l'une des revendications précédentes, dans lequel l'enveloppe extérieure (5) est un couvercle de configuration plate ou un couvercle en forme de grille qui est réalisé en tubes en métal ou en tubes en matière plastique.

7. Dispositif selon l'une des revendications précédentes, dans lequel l'entraînement (9) comprend au moins un cylindre pneumatique, un moteur électrique ou un entraînement télescopique.

8. Dispositif selon l'une des revendications précédentes, dans lequel l'interface (8) comporte une interface de données réalisée plus particulièrement en tant que :
- interface de bus de terrain, en particulier pour un bus CAN ou un Profibus,
- interface sérielle, en particulier Firewire,
- raccord Ethernet ou Profinet et/ou
- adaptateur WLAN.

9. Dispositif selon l'une des revendications précédentes, dans lequel l'interface (8) comporte en outre un premier composant de connexion enfichable qui fournit une interface de commande avec une pluralité de contacts qui sont adaptés pour transmettre des signaux de commande et/ou un deuxième composant de connexion enfichable qui fournit une interface électrique pour raccordement à une alimentation de charge.

10. Dispositif selon l'une des revendications précédentes, dans lequel l'interface (8) comporte additionnellement un troisième composant de connexion enfichable qui fournit une interface pneumatique avec des raccords pour l'adduction et l'évacuation d'air comprimé.

11. Dispositif selon l'une des revendications précédentes, comportant au moins un premier capteur (51), et plus particulièrement un capteur d'image ou un capteur ponctuel infrarouge qui est monté plus particulièrement sur un bord de l'enveloppe extérieure (5) situé en vis-à-vis de l'interface (8).

12. Dispositif selon la revendication 11, comportant un deuxième capteur (61), et plus particulièrement un capteur d'image ou un capteur ponctuel infrarouge qui est monté plus particulièrement sur le bord de l'enveloppe extérieure (5) situé en vis-à-vis de l'interface (8) sur un côté situé en vis-à-vis du premier capteur (51).

13. Dispositif selon la revendication 11 ou 12, comportant un troisième capteur qui est un capteur infrarouge et est configuré pour surveiller une zone de détection qui est plus grande qu'une zone de détection du premier capteur.

14. Dispositif selon l'une des revendications 11 à 13, comportant une unité de calcul (7) qui est configurée pour évaluer des signaux du premier capteur (51), en particulier des signaux du deuxième et/ou du troisième capteur étant également traités, et pour détecter l'objet (4) à l'aide de l'évaluation de signaux.

15. Dispositif selon la revendication 8 et 14, dans lequel l'unité de calcul (7) est configurée pour produire en sortie des résultats de l'évaluation de signaux via l'interface de données.

16. Dispositif selon la revendication 12 et 15, dans lequel le premier capteur (51) et le deuxième capteur (61) sont des capteurs d'images et dans lequel l'unité de calcul (7) est configurée pour évaluer des signaux du premier capteur (51) et du deuxième capteur (61), l'unité de calcul (7) étant programmée pour calculer une information d'image en 3 dimensions à partir d'informations d'images en 2 dimensions des capteurs (51, 61) et pour produire en sortie l'information d'image en 3 dimensions via l'interface de données, en particulier de manière compressée sous forme de vecteurs.

17. Bras de robot équipé d'un dispositif selon l'une des revendications 1 à 16.

18. Robot équipé d'un dispositif selon l'une des revendications 1 à 16.

19. Robot selon la revendication 18, comportant une commande qui est configurée pour détecter un contact à l'aide de signaux de capteurs de l'enveloppe extérieure (5) et pour mettre le robot en mode de protection, un mouvement du robot en mode de protection étant plus particulièrement omis, ralenti ou exécuté avec une force réduite.

20. Robot selon la revendication 18 ou 19, comportant une commande qui est configurée pour détecter un contact à l'aide de signaux de capteurs de l'enveloppe extérieure (5) et apprendre un déroulement de mouvement à l'aide du contact.
